# EUROPÄISCHE PATENTSCHRIFT

(11) **EP 3 356 187 B1**
(45) Veröffentlichungstag und Bekanntmachung des Hinweises auf die Patenterteilung: **06.03.2019**
(21) Anmeldenummer: 17746422.9
(22) Anmeldetag: 20.07.2017
(51) Int. Cl.: B60R 11/00, B60N 3/10

(54) **EINRICHTUNG ZUM HALTEN VON GEGENSTÄNDEN**
DEVICE FOR HOLDING OBJECTS
DISPOSITIF DE FIXATION D'OBJETS

(30) Priorität: 26.07.2016 DE 102016113769
(43) Veröffentlichungstag der Anmeldung: 08.08.2018
(73) Patentinhaber: Dr. Schneider Kunststoffwerke GmbH, 96317 Kronach Bayern (DE)
(72) Erfinder: LEISTNER, Florian, 96450 Coburg Bayern (DE)
(86) Internationale Anmeldenummer: PCT/EP2017/068298
(87) Internationale Veröffentlichungsnummer: WO 2018/019689

(56) Entgegenhaltungen:
- DE-A1-102014 115 050
- DE-U1-202005 005 226

## Beschreibung

Es wird eine Einrichtung zum Halten von Gegenständen mit einer Halteeinheit und einem drehbar in der Halteeinheit gelagerten Aufnahmeelement beschrieben, wobei die Halteeinheit verschiebbar in einem Aufnahmeraum angeordnet ist und das Aufnahmeelement mindestens zwei Abschnitte aufweist, in welche Funktionselemente eingesetzt sind. Die Funktionselemente sind zum Halten von Gegenständen ausgebildet und dienen als Aufbewahrungsbehälter. Derartige Einrichtungen sind bspw. für Fahrzeuge, wie Kraftfahrzeuge, Flugzeuge, Schiffe und weitere Verkehrsmittel bekannt. Insbesondere bei Kraftfahrzeugen werden Einrichtungen zum Halten von Gegenständen verwendet, um Personen im Fahrzeug die Aufbewahrung verschiedener Gegenstände zu ermöglichen.

So offenbart bspw. DE 20 2005 005 226 U1 ein Kraftfahrzeugausstattungsteil mit mindestens zwei aneinandergrenzenden, sich zu einer kreisförmigen Ablageschale ergänzenden Ablageschalen, die drehbar angeordnet sind. Die Ablageschalen können in einem Einbauteil angeordnet sein, welches schubladenartig ausgebildet ist und über eine Federkraft und mittels einer Herzkurvensteuerung herausbewegt werden kann.

Ein solches Kraftfahrzeugausstattungsteil kann im Bereich einer Instrumententafel eines Kraftfahrzeugs angeordnet sein. Wird das Einbauteil von DE 20 2005 005 226 U1 herausgefahren, können in die beiden schubladenartig ausgebildeten Ablageschalen verschiedene Gegenstände eingesetzt werden, wobei jeweils eine Ablageschale hervorsteht.

Die in DE 20 2005 005 226 U1 beschriebene Vorrichtung weist jedoch Nachteile auf. So ist es nicht möglich, größere Gegenstände, wie bspw. Getränkebehälter, sicher in den Ablageschalen zu halten, ohne dass die Vorrichtung entsprechend groß dimensioniert ist oder es zu einem leichten Verkippen und damit einem Ausschütten eines Getränks kommt. Die Halterung von Gegenständen wird bei diesem Kraftfahrzeugausstattungsteil stets nur über die Ablageschalen erreicht.

Demgegenüber ist es Aufgabe, eine Einrichtung zum Halten von Gegenständen anzugeben, welche die Nachteile des Stands der Technik behebt und eine einfache und sichere Halterung von Gegenständen ermöglicht.

Die Aufgabe wird durch eine Einrichtung mit den in Anspruch 1 angegebenen technischen Merkmalen gelöst. Vorteilhafte Weiterbildungen sind in den Unteransprüchen im Detail angegeben.

Eine Einrichtung zum Halten von Gegenständen, welche die vorstehend genannte Aufgabe löst, weist mindestens eine Halteeinheit, eine mit der Halteeinheit gekoppelte Blende und ein drehbar in der Halteeinheit gelagertes Aufnahmeelement auf, wobei
- die Halteeinheit verschiebbar in einem Aufnahmeraum angeordnet ist,
- das Aufnahmeelement mindestens zwei Abschnitte aufweist, in welche Funktionselemente eingesetzt sind,
- die Funktionselemente zur Aufnahme und/oder zum Halten von Gegenständen ausgebildet sind, und
- die Blende verschwenkbar an der Halteeinheit angeordnet und durch eine Verlagerung der Halteeinheit aus dem Aufnahmeraum verschwenkbar ist.

Durch die Kopplung der Blende mit der Halteeinheit wird beim Herausfahren der Halteeinheit die Blende nach unten verschwenkt und kann in Kombination mit einem darüber befindlichen Funktionselement eine Aufnahme, bspw. für Getränkebehälter, bereitstellen. Zudem ist es möglich, Tablet-PCs sicher zu halten, ohne dass diese herausfallen oder verkippen können. Die verschwenkbar an der Halteeinheit gekoppelte Blende ist nicht nur dekoratives Element oder Verschließelement für die Einrichtung, sondern auch Bestandteil zum Halten von Gegenständen. Selbstverständlich können über Funktionselemente auch Gegenstände aufgenommen werden, welche nicht über die verschwenkte Blende zusätzlich gehalten werden müssen. In weiteren Ausführungsformen können Funktionselemente auch schalenartig ausgebildet sein, sodass darin aufgenommene Gegenstände nicht bis zur verschwenkten Blende nach unten ragen. Das Aufnahmeelement kann verschiedenartig ausgebildet und daher zur Aufnahme einer Vielzahl von Funktionselementen ausgebildet sein. Beispielsweise weist das Aufnahmeelement mehr als zwei Abschnitte auf, wobei insbesondere drei, vier oder fünf Abschnitte in bevorzugten Ausführungsformen vorgesehen sind. Es können aber auch mehr als fünf Abschnitte vorgesehen sein. Das Aufnahmeelement ist drehbar in der Halteeinheit angeordnet, wobei das Aufnahmeelement vorzugsweise im Wesentlichen rund ausgebildet ist. Die Drehachse des Aufnahmeelements kann bspw. orthogonal zur Verschieberichtung der Halteeinheit verlaufen. In weiteren Ausführungsformen können auch polygone Ausführungen des Aufnahmeelements vorgesehen sein, wobei hierzu entsprechend der Verschiebeweg der Halteeinheit und die Ausbildung der Abschnitte zur Aufnahme der Funktionselemente bestimmt werden müssen. Es ist dabei eine Abstimmung der Kinematikbauteile, d.h. der bewegbaren Elemente der Einrichtung, erforderlich.

In bevorzugten Ausführungsformen ist das Aufnahmeelement so ausgebildet, dass mit in die Abschnitte eingesetzten Funktionselementen ein im Wesentlichen rundes Element bereitgestellt wird. Hierzu weisen die Funktionselemente vorzugsweise auch bogen- bzw. kreisförmige Segmente auf, sodass die runde Ausgestaltung erreicht wird.

Die Funktionselemente können Mittel zum Halten von Gegenständen aufweisen. Die Mittel zum Halten von Gegenständen der Funktionselemente können durch speziell ausgebildete Oberflächen, schalenartige Ausformungen, federnde und/oder elastische Halteelemente, oder durch eine Schale selbst gebildet sein.

Die Blende ist weiter so mit der Halteeinheit gekoppelt, dass durch ein Herausbewegen der Halteeinheit diese automatisch verschwenkt wird. Beispielsweise kann die Halteeinheit in einem Blenden- bzw. Dekorbereich zwischen einem Airbag und einem Handschuhkasten angeordnet sein. In weiteren Ausführungsformen kann dabei die Einrichtung sich zwischen Luftausströmern befinden. Hierzu weist die Blende an ihrer Vorderseite, welche im aufgenommenen Zustand der Halteeinheit im Aufnahmeraum sichtbar ist, eine Oberflächenausgestaltung auf, die bspw. der Ausgestaltung von benachbarten Luftausströmern entspricht. Insbesondere kann die Blende an der Vorderseite lamellenartige Elemente aufweisen, die den Anschein eines Luftausströmers erwecken. Handelt es sich bei diesem Dekor- bzw. Blendenbereich eines Kraftfahrzeugs um einen Abschnitt mit einem sogenannten Breitbandausströmer, wobei die horizontal verlaufenden Lamellen nicht verschwenkt werden, so fügt sich die Blende im nicht verschwenkten Zustand in den Blendenbereich ein.

Die Halteeinheit kann anschließend aus dem Aufnahmeraum herausgefahren werden, wobei über die Kopplung der Blende mit der Halteeinheit die Blende automatisch verschwenkt wird und die Halteeinheit so weit nach vorne steht, dass das drehbar in der Halteeinheit gelagerte Aufnahmeelement soweit hervorsteht, dass mindestens ein Funktionselement, welches in einem entsprechenden Abschnitt des Aufnahmeelements angeordnet ist, hervorsteht. Anschließend können bspw. Getränkebehälter oder andere Gegenstände in das Funktionselement eingesetzt und auch über die verschwenkte Blende von unten abgestützt werden. Wünscht eine Person bspw. andere Gegenstände aufzunehmen oder entsprechend in den jeweiligen Funktionssegmenten gelagerte Elemente zu verwenden, so wird das Aufnahmeelement verdreht und ein weiteres Funktionselement ragt aus dem Aufnahmefach hervor. Die Ausbildung der Halteeinheit im Hinblick auf dessen Höhe gibt vor, ob im aufgenommenen Zustand mindestens eines Funktionselements Gegenstände darin gelagert werden können. In weiteren Ausführungsformen ist die Halteeinheit jedoch so flach ausgebildet, dass darin keine Gegenstände gehalten werden können, wenn die Halteeinheit sich im Aufnahmeraum befindet. Hierdurch wird jedoch eine Einrichtung zum Halten von Gegenständen bereitgestellt, welche sehr wenig Platz benötigt und dennoch eine Aufnahme von verschiedenen Gegenständen bereitstellt, da über die verschwenkte Blende zusätzlich eine Abstützung nach unten erfolgen kann.

Die Blende kann über mindestens eine Getriebeanordnung mit der Halteeinheit gekoppelt sein. Eine Getriebeanordnung ermöglicht eine Übersetzung der Verschiebebewegung der Halteeinheit in eine entsprechende Verschwenkbewegung der Blende. In weiteren Ausführungsformen ist es vorgesehen, dass die Halteeinheit bspw. in eine erste Stellung aus dem Aufnahmeraum heraus und in eine zweite Stellung aus dem Aufnahmeraum heraus verschoben wird, wobei hierzu die Blende ebenso verschiedene Verschwenkpositionen einnimmt.

Dabei kann die Getriebeanordnung mindestens ein erstes Zahnrad und ein zweites Zahnrad aufweisen, die miteinander in Eingriff stehen und drehbar an einem den Aufnahmeraum mindestens abschnittsweise umgebenden Gehäuse gelagert sind. Das erste Zahnrad ist mit einer an der Halteeinheit angeordneten ersten Zahnstange und das zweite Zahnrad ist mit einer zweiten im Aufnahmeraum verschiebbar gelagerten Zahnstange gekoppelt.

In einer ersten Ausführungsvariante ist an der zweiten Zahnstange die Blende verschwenkbar gelagert. Wird die Halteeinheit aus dem Aufnahmeraum bewegt, wird entsprechend die erste Zahnstange bewegt und bewirkt über das erste Zahnrad und das zweite Zahnrad eine Verlagerung der zweiten Zahnstange in der gleichen Richtung. Hierdurch werden Schwenkarme der Blende, über welche die Blende mit zwei zweiten Zahnstangen verschwenkbar verbunden ist, aus dem Aufnahmeraum heraus bewegt. Da die Schwenkarme nicht mehr durch den Aufnahmeraum abgestützt werden, können diese nach unten verschwenken und bewirken so ein Verschwenken der Blende. Damit die Blende oder die Schwenkarme nicht im Öffnungsbereich des Aufnahmeraums den Öffnungsbereich oder weitere Elemente, die sich in der Nähe befinden, beschädigen, können bspw. Lagerrollen vorgesehen sein. Die Lagerrollen unterstützen zudem die Verlagerung der Schwenkarme. Das Verschwenken der Schwenkarme kann bspw. über die Lagerrollen erfolgen. Befindet sich die Einrichtung im Bereich einer Bedienkonsole eines Kraftfahrzeugs, könnten bspw. unterhalb des Aufnahmeraums Bedienelemente angeordnet sein. Ein Anschlagen der Schwenkarme könnte zu einer Beschädigung der Bedienelemente führen. Weiterhin wäre es möglich, dass die Oberfläche der Verkleidung unterhalb des Aufnahmeraums durch ein Anschlagen der Schwenkarme beschädigt wird.

Lagerrollen oder andere Einrichtungen können eine Beschädigung jedoch verhindern. Darüber hinaus hängt eine mögliche Beschädigung von der Dimensionierung der Bestandteile der Einrichtung zum Halten von Gegenständen und deren Einbauort ab. Es muss daher nicht zwangsläufig zu Beschädigungen kommen, nur weil die Schwenkarme über den Aufnahmeraum abgestützt sind.

In einer zweiten Ausführungsvariante ist das erste Zahnrad über ein drittes Zahnrad mit dem zweiten Zahnrad gekoppelt, wobei das zweite Zahnrad und das dritte Zahnrad um eine gemeinsame Drehachse verdrehbar sind und die zweite Zahnstange einen Halteabschnitt aufweist, welcher einen Endabschnitt eines Schwenkarms der Blende im nicht verfahrenen Zustand der Halteeinheit hält. Das erste Zahnrad steht mit dem dritten Zahnrad kämmend in Eingriff und das zweite Zahnrad steht mit der zweiten Zahnstange kämmend in Eingriff.

Das zweite Zahnrad kann insbesondere einen kleineren Durchmesser aufweisen als das dritte Zahnrad, so dass eine Untersetzung der Drehbewegung erfolgt. Insbesondere können die Durchmesser des ersten Zahnrads, des zweiten Zahnrads und des dritten Zahnrads so gewählt werden, dass bei einer Verlagerung der Halteeinheit aus dem Aufnahmeraum eine demgegenüber verzögerte Verlagerung der zweiten Zahnstange in der gleichen Richtung erfolgt. Werden die Halteeinheit aus dem Aufnahmeraum und damit die erste Zahnstange aus dem Aufnahmeraum bewegt, stellt sich über die Getriebeanordnung eine betragsmäßig geringere Bewegung der zweiten Zahnstange ein. In Bezug auf das Gesamtsystem der Einrichtung zum Halten von Gegenständen werden sowohl die erste Zahnstange als auch die zweite Zahnstange in der gleichen Richtung bewegt. In Bezug auf die Halteeinheit wird trotz einer Verlagerung der zweiten Zahnstange in die gleiche Richtung wie die Halteeinheit die zweite Zahnstange in die entgegengesetzte Richtung bewegt, da diese über die Getriebeanordnung mit einer geringen Geschwindigkeit bewegt wird. Hierdurch wird erreicht, dass beim Herausbewegen der Halteeinheit aus dem Aufnahmeraum die zweite Zahnstange und der Halteabschnitt der zweiten Zahnstange einen Schwenkarm der Blende freigeben, so dass die Blende verschwenkt werden kann.

Dadurch kann das Verschwenken der Blende verzögert erfolgen. Die Halteeinheit kann um einen konstruktiv durch entsprechende Auswahl der Komponenten bestimmbaren Weg aus dem Aufnahmeraum verfahrbar sein, bevor die Blende verschwenkt wird. Hierdurch wird ein Anschlagen von Schwenkarmen der Blende ausgeschlossen. Bei der Verlagerung der Halteeinheit zurück in den Aufnahmeraum wird ebenfalls ein Anschlagen verhindert und die Schwenkarme werden über die Halteabschnitte von bspw. zwei zweiten Zahnstangen verschwenkt, bevor diese in Kontakt mit dem Aufnahmeraum kommen oder eine die Öffnung des Aufnahmeraums umgebende Verkleidung beschädigen.

Die Übertragung der Verschiebebewegung der Halteeinheit in ein Verschwenken der Blende wird hierdurch auf einfache Weise über die Getriebeanordnung und die Zahnstangen realisiert.

Der Halteabschnitt der zweiten Zahnstange wirkt dabei als Betätigungselement für den Schwenkarm der Blende. Wird die zweite Zahnstange durch ein Verschieben der Halteeinheit relativ zu der Halteeinheit zurückbewegt, gleitet der Halteabschnitt der zweiten Zahnstange an einem Endabschnitt des Schwenkarms soweit zurück, bis dieser den Endabschnitt des Schwenkarms freigibt und ein Verschwenken der Blende erfolgt. Auf diese Weise wird eine einfache und sichere Kopplung zwischen der Halteeinheit und der Blende realisiert.

Zusätzlich kann an der Halteeinheit ein Widerlager vorgesehen sein, an welchem mindestens ein Schwenkarm der Blende im nicht verschwenkten Zustand anliegt. Vorzugsweise befindet sich das Widerlager in Bezug auf den Drehpunkt des Schwenkarms auf der der Blende zugewandten Seite des Schwenkarms. Der Halteabschnitt der zweiten Zahnstange greift in Bezug auf den Drehpunkt des Schwenkarms an der der Blende abgewandten Seite des Schwenkarms an.

Die zweite Zahnstange kann auch an einem entsprechend ausgebildeten Führungsabschnitt der Halteeinheit verschiebbar gelagert sein, wobei die zweite Zahnstange relativ im Aufnahmeraum verschiebbar gelagert ist.

Die Halteeinheit kann ein Arretierungselement für den Endabschnitt mindestens eines Schwenkarms der Blende aufweisen. Ein solches Arretierungselement stellt im nicht verschwenkten Zustand der Blende eine zusätzliche Sicherung für den Schwenkarm bzw. die gesamte Blende bereit. Zusätzlich ist über dieses Arretierungselement ein Verrasten im unverschwenkten Zustand möglich, sodass eine zusätzliche Kraft zum Verschwenken erforderlich ist. In der Regel ist der Schwenkarm so ausgebildet, dass sich dessen Drehpunkt außermittig, d. h. an einem der Blende abgewandten Endabschnitt, befindet, wobei das Verschwenken schwerkraftbedingt erfolgt. Das Arretierungselement stellt dabei nur eine zusätzliche Sicherung bereit. Ein Arretierungselement kann bspw. durch einen Magneten gebildet werden, der mit einem entsprechend polarisierten Magneten am Schwenkarm oder einem Metallelement des Schwenkarms zusammenwirkt.

Die Einrichtung kann in weiteren Ausführungsformen eine Feder aufweisen, die im Bereich der Schwenkachse der Blende angeordnet ist. Die Feder bewirkt ein Unterstützen der Verschwenkbewegung der Blende. Hierdurch wird sichergestellt, dass die Blende mit einer ausreichenden Kraft nach unten verschwenkt wird, sobald bspw. der Halteabschnitt der zweiten Zahnstange den Endabschnitt des Schwenkarms freigibt. Die Feder kann bspw. als Spiralfeder ausgebildet sein und um einen entsprechenden Lagerabschnitt im Bereich der Drehachse des Schwenkarms vorgesehen sein. Eine weitere mögliche Ausgestaltung einer Feder stellt eine Schenkelfeder dar.

Bei den vorstehend beschriebenen Ausführungsformen weist die Blende zwei Schwenkarme auf, die jeweils über entsprechende Mittel gelagert sein können. Hierdurch ist ein synchrones Verschwenken der Blende sichergestellt.

Die Einrichtung weist in weiteren Ausführungsformen mindestens eine Federeinrichtung und eine Herzkurvenanordnung auf, wobei die Halteeinheit über die mindestens eine Federeinrichtung nach einer Entriegelung mittels der Herzkurvenanordnung aus dem Aufnahmeraum heraus verfahrbar ist. Die Halteeinheit kann hierzu über einen sogenannten Push-Push-Mechanismus aus dem Aufnahmeraum heraus verfahren werden. Beispielsweise drückt eine Bedienperson gegen die Blende, wodurch eine geringe Verlagerung der Halteeinheit in den Aufnahmeraum hinein erfolgt. Hierdurch wird über die Herzkurvenanordnung die Halteeinheit freigegeben und die Halteeinheit wird über die Federeinrichtung nach außen geschoben. Anschließend befindet sich die Halteeinheit in einer herausgefahrenen Position und es können Gegenstände in die Funktionselemente eingesetzt werden. Soll die Halteeinheit wieder zurück verfahren werden, so kann bspw. die Blende hochgeklappt und in Richtung des Aufnahmeraums bewegt werden, wodurch die Halteeinheit in den Aufnahmeraum verfahren wird. Hierzu wird die Halteeinheit um ein gewisses Maß weiter hineinverschoben als die Stellung im unbetätigten Zustand, wodurch ein an der Halteeinheit angeordneter Führungsstift in einer Herzkurve eine Verriegelungsposition einnimmt. Anschließend wird die Halteeinheit über die Feder in diese Verriegelungsstellung verbracht und die Halteeinheit ist derart in dem Aufnahmeraum aufgenommen, dass die Blende bspw. mit einer den Aufnahmeraum umgebenden Blende eines Armaturenbretts oder einer Dekoreinheit bündig abschließt.

Die Federeinrichtung kann mindestens eine Rollfeder aufweisen, wobei die Rollfeder an einem Ende mit der Halteeinheit verbunden und an dem anderen Ende auf einer drehbaren im Aufnahmeraum gelagerten Welle gelagert ist. Nachdem der Führungsstift aus der Verriegelungsstellung verbracht wurde drückt die Rollfeder die Halteeinheit aus dem Aufnahmeraum heraus. Die Rollfeder ist entsprechend so ausgebildet und ausgewählt, dass eine Verlagerung der Halteeinheit mit einer ausreichenden Geschwindigkeit und/oder unter Berücksichtigung des Gewichts der gesamten Einrichtung - gegebenenfalls mit darin gelagerten Gegenständen - mit einem ausreichenden Druck erfolgt.

Zusätzlich können Bewegungsdämpfer vorgesehen sein, die eine gleichmäßige Verlagerung der Halteeinheit sicherstellen. Insbesondere kann über Bewegungsdämpfer auch eine Beschädigung der Halteeinheit durch ein zu starkes Hineindrücken verhindert werden.

In alternativen Ausführungsformen ist die Halteeinheit über einen elektrischen Antrieb aus dem Aufnahmefach verfahrbar, und/oder das Aufnahmeelement über einen elektrischen Antrieb verdrehbar. In derartigen Ausführungsformen ist in der Regel keine Herzkurvensteuerung vorgesehen, sodass kein Überwinden einer Verriegelungsposition eines Führungsstifts erforderlich ist. Demgemäß kann die Halteeinheit über einen Elektromotor herausgefahren werden, wobei über die Kopplung der Blende, bspw. über eine Getriebeanordnung und Zahnstangen, ein Verschwenken der Blende erfolgt. In noch weiteren Ausführungsformen kann auch das Aufnahmeelement über einen elektrischen Antrieb verdrehbar sein, wobei verschiedene Funktionselemente zur Verfügung gestellt werden.

Die Funktionselemente können elastische, flexible Elemente aufweisen. Beispielsweise weisen die Funktionselemente oder mindestens ein Funktionselement zwei sich kreuzende gummiartige Elemente auf, welche bspw. eine Brille, ein Smartphone, oder andere Gegenstände aufnehmen können. Aufgrund der flexiblen, elastischen Ausbildung ist es möglich, verschieden geformte Gegenstände stets sicher zu halten.

In weiteren Ausführungsformen ist die Blende an der im nicht verschwenkten Zustand dem Aufnahmeraum zugewandten Seite so ausgebildet, dass die dem Aufnahmeraum zugewandte Seite im verschwenkten Zustand einen im Wesentlichen ebenen Auflageabschnitt bereitstellt. Ein ebener Auflageabschnitt kann bspw. über eine verschwenkbare, an der Rückseite der Blende angeordnete Halteplatte erreicht werden. Die Halteplatte ist verschwenkbar mit der Rückseite der Blende und verschwenkbar mit der Halteeinheit gekoppelt, wobei ein Verschwenken der Blende automatisch ein Verschwenken der Halteplatte bewirkt.

In einem Aufnahmeraum können weiter Führungselemente vorgesehen sein, welche bspw. in entsprechende Führungen in der Halteeinheit eingreifen. Hierdurch wird die Halteeinheit sicher geführt. Zusätzlich kann die Halteeinheit einen Rahmen aufweisen, der die entsprechenden Komponenten trägt und innerhalb des Aufnahmeraums verfahrbar ist. Der Rahmen selbst kann beim Verfahren der Halteeinheit im Wesentlichen innerhalb des Aufnahmeraums verbleiben, wobei sichergestellt werden muss, dass das Aufnahmeelement soweit aus dem Aufnahmeraum hervorsteht, dass jeweils eine Funktionseinheit zugänglich ist.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung eines Teils eines Armaturenbretts mit einer darin integrierten Einrichtung zum Halten von Gegenständen in einer ersten Ausführungsform;
- Fig. 2: eine perspektivische Darstellung der Einrichtung von Fig. 1 mit einer herausgefahrenen Halteeinheit;
- Fig. 3: eine perspektivische Darstellung der Halteeinheit von Fig. 1;
- Fig. 4: eine weitere perspektivische Darstellung der Halteeinheit von Fig. 1 in einer herausgefahrenen Stellung mit verschwenkter Blende;
- Fig. 5: eine schematische Seitenansicht einer Einrichtung zum Halten von Gegenständen in einer zweiten Ausführungsform;
- Fig. 6: eine weitere schematische Seitenansicht der Einrichtung von Fig. 5 ohne Aufnahmegehäuse;
- Fig. 7: eine perspektivische Darstellung der Einrichtung von Fig. 5 von unten;
- Fig. 8: eine schematische Seitenansicht von Komponenten der Einrichtung von Fig. 5;
- Fig. 9: eine perspektivische Darstellung einer Blende und einer Halteplatte;
- Fig. 10: eine schematische Darstellung eines Aufnahmeelements mit eingesetzten Funktionselementen;
- Fig. 11: eine schematische Darstellung der Funktionselemente von Fig. 10 ohne Aufnahmeelement;
- Fig. 12: eine perspektivische Darstellung eines ersten Funktionselements;
- Fig. 13: eine perspektivische Darstellung eines zweiten Funktionselements; und
- Fig. 14: eine perspektivische Darstellung eines dritten Funktionselements.

In den Zeichnungen mit gleichen Bezugszeichen versehene Teile entsprechen im Wesentlichen einander, sofern nichts anderes angegeben ist. Darüber hinaus wird darauf verzichtet, Bestandteile zu beschreiben, welche nicht wesentlich zum Verständnis der hierin offenbarten technischen Lehre sind.

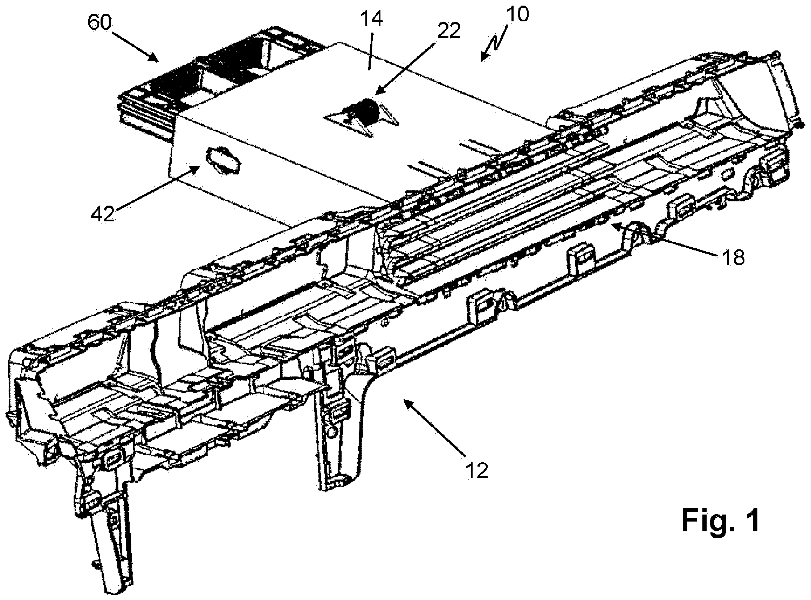

Fig. 1 zeigt eine perspektivische Darstellung eines Teils eines Armaturenbretts mit einer darin integrierten Einrichtung 10 zum Halten von Gegenständen einer ersten Ausführungsform. Die Einrichtung 10 weist eine Halteeinheit 60 und ein die Halteeinheit 60 umgebendes Gehäuse 14 auf. Das Gehäuse 14 ist an einer Aufnahme 12 angeordnet. Die Aufnahme 12 ist so ausgebildet, dass darin drei Luftausströmer aufgenommen werden können, wobei zwischen zwei gleich breiten Luftausströmern eine Blende 18 der Einrichtung 10 angeordnet ist. Die Blende 18 ist an ihrer Vorderseite so ausgestaltet, dass diese im Wesentlichen dem optischen Erscheinungsbild der Luftausströmer entspricht. Hierzu sind drei horizontal verlaufende Lamellenabschnitte ausgebildet. Bei in die Aufnahme 12 eingesetzten Luftausströmern wird dabei über die gesamte Länge der Aufnahme 12 ein homogenes Erscheinungsbild erreicht. Die lamellenartig ausgebildeten vorderen Leisten der Blende 18 fluchten dabei mit den Lamellen der seitlich dazu angeordneten Luftausströmer. Eine Einrichtung 10 gemäß einer zweiten Ausführungsform weist im aufgenommenen Zustand ein gleiches Erscheinungsbild auf. Die Einrichtung 10 der zweiten Ausführungsform unterscheidet sich von der in den Fig. 1 bis 4 gezeigten Ausführungsform durch die Kopplung der Blende 18 mit einer zweiten Zahnstange 40 und der Halteeinheit 60.

Die Halteeinheit 60 ist in Fig. 1 in einer aufgenommenen Stellung gezeigt, wobei zusätzlich eine Rollfeder 22 dargestellt ist, welche zum Herausfahren der Halteeinheit 60 dient. Zusätzlich ist ein Bewegungsdämpfer 42 angedeutet, der über ein Zahnrad mit einer ersten Zahnstange 38 in Eingriff steht, um eine gleichmäßige Bewegung der Halteeinheit 60 zu realisieren.

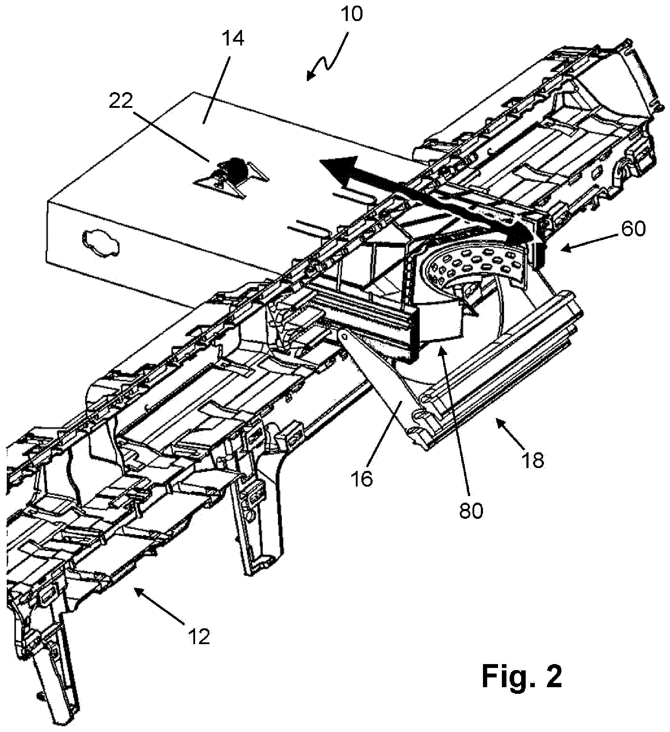

Fig. 2 zeigt eine perspektivische Darstellung der Einrichtung 10 von Fig. 1 mit einer herausgefahrenen Halteeinheit 60 und einer verschwenkten Blende 18. Die Blende 18 ist über Schwenkarme 16 verschwenkbar mit zweiten Zahnstangen 40 verbunden. D.h. die Blende 18 wird über die zweiten Zahnstangen 40 aus dem Aufnahmeraum bzw. Gehäuse 14 herausbewegt und um deren vorderes Ende verschwenkt. An einem Rahmen 62 der Halteeinheit 60 ist ein Aufnahmeelement 70 drehbar gelagert, welches drei Funktionselemente 80, 90 und 100 aufweist. In Fig. 2 ist der herausgefahrene Zustand dargestellt, wobei über die Halteeinheit 60 das Funktionselement 80 zugänglich ist. Gleichzeitig ist die Blende 18 verschwenkt, wodurch die Blende 18 als Gegenlager für Gegenstände dient, die in dem als Cupholder ausgebildeten Funktionselement 80 aufgenommen werden. Beispielsweise kann eine Getränkeflasche in das Funktionselement 80 eingesetzt werden, wobei der Boden der Getränkeflasche auf der Blende 18 bzw. einer Halteplatte 24 aufliegt. Hierdurch wird eine vergrößerte Aufnahme bereitgestellt. Die Blende 18 dient dabei zusätzlich als Aufnahmeelement, sodass eine relativ klein bauende Einrichtung 10 verwendet werden kann und dennoch eine Vielzahl von Lagermöglichkeiten auch für größere Gegenstände sicher gewährleistet wird.

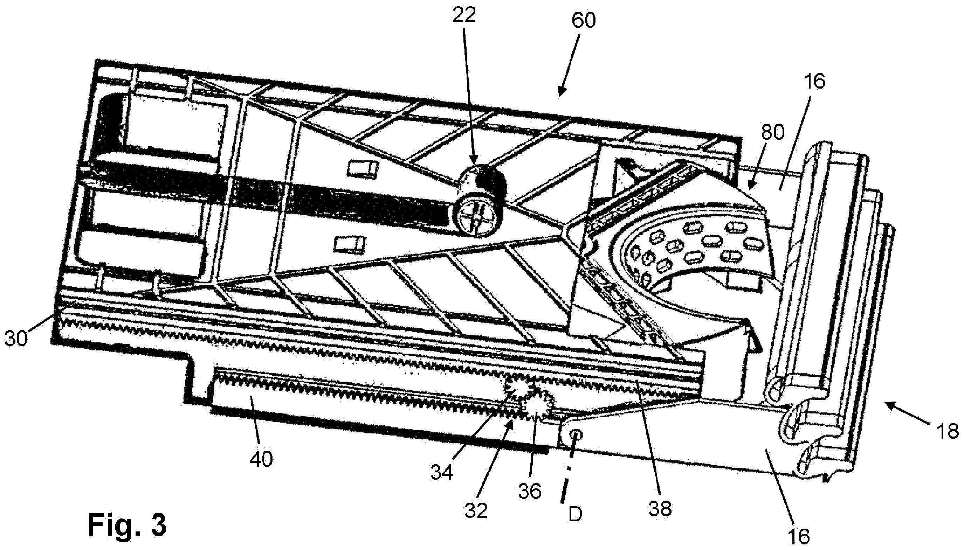

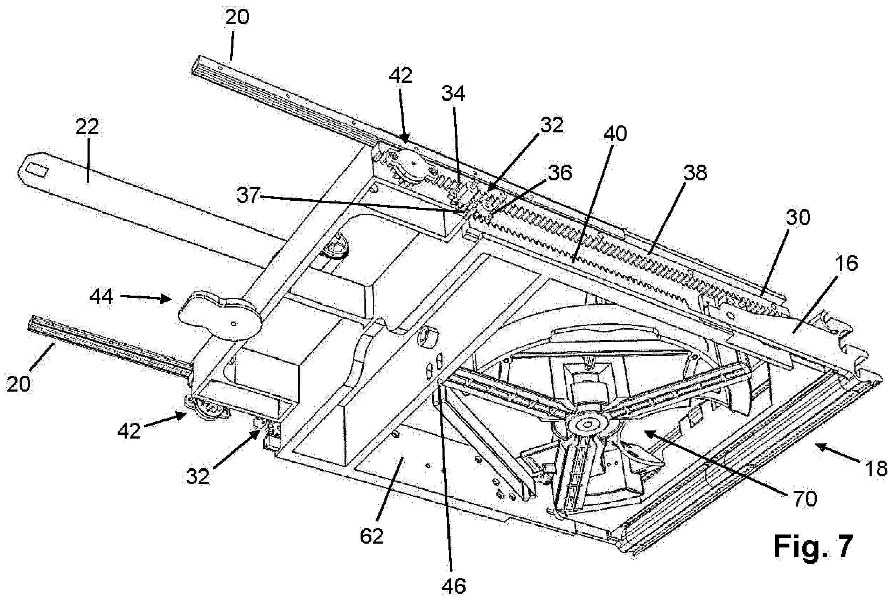

Fig. 3 zeigt eine perspektivische Darstellung der Halteeinheit 60 von Fig. 1. Die Halteeinheit 60 weist einen Rahmen auf, über den das Aufnahmeelement 70 gehalten ist. Der Rahmen kann beispielsweise so ausgebildet sein wie ein Rahmen 62 der zweiten Ausführungsform (siehe Fig. 7). Das Aufnahmeelement 70 ist drehbar um einen mittleren Abschnitt 74 gelagert. In das Aufnahmeelement 70 können drei verschiedene Funktionselemente 80, 90 und 100 aufgenommen werden. Im ausgefahrenen Zustand der Halteeinheit 60 aus einem Aufnahmeraum, der zumindest abschnittsweise von dem Gehäuse 14 umgeben ist, ist jeweils nur ein Funktionselement 80, 90, 100 zugänglich.

Die Halteeinheit 60 weist zusätzlich seitliche Führungen 30 auf, die mit entsprechenden Führungsleisten 20 des Gehäuses 14 in Verbindung stehen. Darüber hinaus ist an dem Rahmen 62 der Halteeinheit 60 zu beiden Seiten jeweils eine erste Zahnstange 38 angeordnet. Die erste Zahnstange 38 steht zu beiden Seiten jeweils mit einem ersten Zahnrad 34 in Eingriff. Das erste Zahnrad 34 steht mit einem zweiten Zahnrad 36 in Eingriff, wobei das erste Zahnrad 34 und das zweite Zahnrad 36, welche zusammen die Getriebeanordnung 32 bilden, drehbar am Gehäuse 14 gelagert sind. Zusätzlich können noch weitere Zahnräder vorgesehen sein, die drehbar mit dem ersten Zahnrad 34 und/oder mit dem zweiten Zahnrad 36 bspw. auf einer gemeinsamen Welle gelagert sind, sodass eine Übertragung der Drehbewegungen realisiert wird. In Abhängigkeit der Ausbildung kann auch eine Umkehr der Drehrichtung erfolgen, wenn dies bspw. zur Realisierung weiterer Funktionen erforderlich ist. Bspw. um ein Freigeben der Schwenkarme 16 zu realisieren. Das zweite Zahnrad 36 steht mit der zweiten Zahnstange 40 kämmend in Eingriff, welche über eine weitere Führungsleiste an der Halteeinheit 60 relativ zu dem Gehäuse 14 und der Halteeinheit 60 verschiebbar gelagert ist.

Ein hinterer Abschnitt des Rahmens 62 ist mit einem Ende einer Rollfeder 22 verbunden. Das andere Ende der Rollfeder 22 ist auf einer Welle gelagert, wobei die Welle drehbar am Gehäuse 14 gelagert ist. Demgemäß ist die Rollfeder 22 im in dem Gehäuse 14 aufgenommenen Zustand der Halteeinheit 60 bestrebt, die Halteeinheit 60 aus dem Aufnahmeraum herauszubewegen. Eine Verriegelung der Halteeinheit 60 erfolgt über eine Herzkurvenanordnung, wie sie bspw. für die Einrichtung 10 der zweiten Ausführungsform in Fig. 7 schematisch angedeutet ist.

Die Schwenkarme 16 der Blende 18 sind jeweils verschwenkbar um die Schwenkachse D an einer zweiten Zahnstange 40 angeordnet, wobei sich die zweiten Zahnstangen 40 zu beiden Seiten der Halteeinheit 60 erstrecken. Ein Verschwenken der Blende 18 kann aufgrund der Kopplung mit der Halteeinheit 60 über die zweite Zahnstange 40, die Getriebeanordnung 32 und die erste Zahnstange 38 nur dann erfolgen, wenn die Halteeinheit 60 aus dem Aufnahmeraum, gebildet durch das Gehäuse 14, herausgefahren wird. In den Figuren wird überwiegend die Funktion der Einrichtungen 10 nur für eine der Zahnstangen 38 und 40 und deren zugeordnete Komponenten beschrieben. Jedoch erfolgt das Verfahren und Verschwenken für die in den Figuren gezeigten Einrichtungen 10 der ersten Ausführungsform und der zweiten Ausführungsform durch die Mittel zum Verfahren und Verschwenken auf beiden Seiten der Halteeinheit 60.

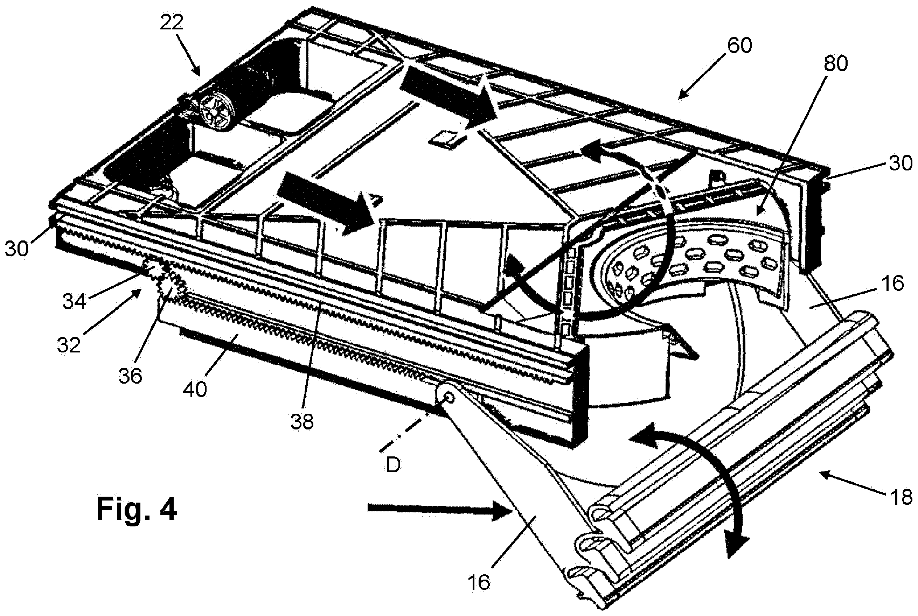

Fig. 4 zeigt eine weitere perspektivische Darstellung der Halteeinheit 60 von Fig. 1 in einer herausgefahrenen Stellung mit verschwenkter Blende 18. Wie über die Pfeile in Fig. 4 gezeigt, erfolgt bei einem Verschieben der Halteeinheit 60 im Hinblick auf Fig. 4 nach rechts ein Verschwenken der
Blende 18. Das Verschwenken der Blende 18 erfolgt über die Getriebeanordnung 32, die eine Übertragung der Bewegung der ersten Zahnstange 38 und des Rahmens 62 auf die zweite Zahnstange 40 bereitstellt. Wird die Halteeinheit 60 und damit die erste Zahnstange 38 nach rechts verlagert, bewirken das erste Zahnrad 34 und das zweite Zahnrad 36 eine Verlagerung der zweiten Zahnstange 40 ebenfalls nach rechts. Da beim Verfahren der zweiten Zahnstangen 40 die Blende 18 aus dem Gehäuse 14 heraus bewegt wird, werden die Schwenkarme 16 nicht mehr durch das Gehäuse 14 abgestützt und können verschwenken. An den Auflagestellen für die Schwenkarme 16 kann das Gehäuse 14 bspw. Lagerrollen für die Schwenkarme 16 aufweisen, damit es zu keiner Beschädigung des Gehäuses 14 oder sich daran anschließenden Teilen kommt und die Verlagerung der Schwenkarme 16 unterstützt wird.

Das Aufnahmeelement 70 mit den Funktionselementen 80, 90 und 100 kann entsprechend dem Pfeil sowohl rechtsherum als auch linksherum verschwenkt werden.

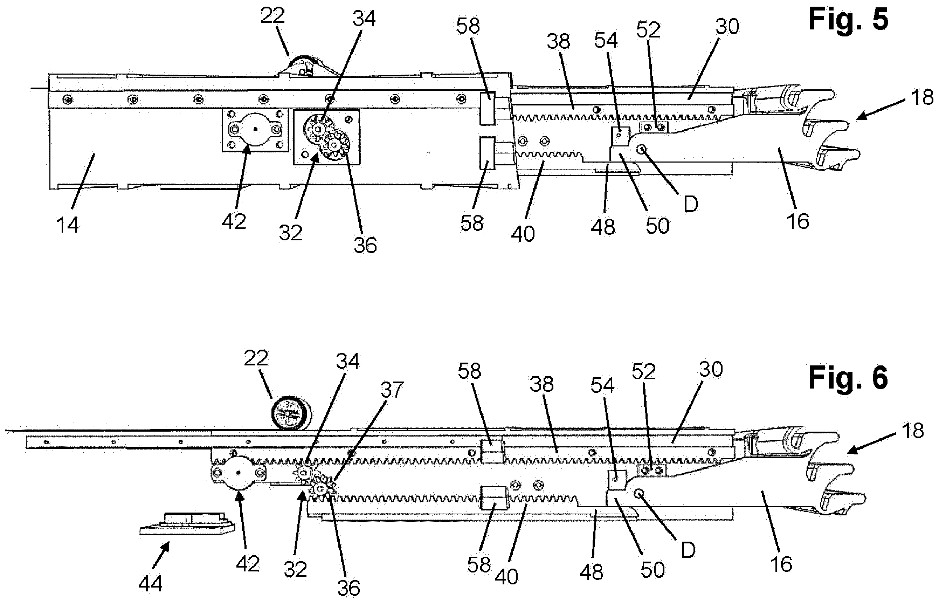

Fig. 5 zeigt eine schematische Seitenansicht einer Einrichtung 10 zum Halten von Gegenständen einer zweiten Ausführungsform. Die in den Fig. 5 bis 8 gezeigte Einrichtung 10 der zweiten Ausführungsform unterscheidet sich von der in den Fig. 1 bis 4 gezeigten Einrichtung 10 der ersten Ausführungsform durch die schwenkbare Lagerung der Blende 18 an dem Rahmen 62 der Halteeinheit 60 und das Halten und Freigeben der Schwenkarme 16 über entsprechende Halteabschnitte 48 an den zweiten Zahnstangen 40. Dadurch wird ein verzögertes Verschwenken der Blende 18 erreicht, wobei die Blende 18 erst dann verschwenkt wird, wenn die Halteeinheit 60 bereits um einen bestimmbaren Weg aus dem Gehäuse 14 heraus bewegt worden ist. Hierdurch wird ein Anschlagen der Schwenkarme 16 am Gehäuse 14 oder an sich in der Nähe des Gehäuses 14 befindlichen Elementen verhindert. Auch beim Zurückfahren der Halteeinheit 60 werden die Schwenkarme 16 der Blende 18 verschwenkt, bevor diese am Gehäuse 14 oder anderen Elementen anstoßen können.

Die Getriebeanordnung 32 der Einrichtung 10 der zweiten Ausführungsform weist ein erstes Zahnrad 34, ein zweites Zahnrad 36 und ein drittes Zahnrad 37 auf. Das zweite Zahnrad 36 und das dritte Zahnrad 37 sind auf einer gemeinsamen Welle, die am Gehäuse 14 gelagert ist, drehbar gelagert. Gegenüber der ersten Ausführungsform steht das zweite Zahnrad 36 nicht mit dem ersten Zahnrad 34 in Eingriff. Bei der hier gezeigten zweiten Ausführungsform steht das dritte Zahnrad 37 kämmend mit der dem ersten Zahnrad 34 in Eingriff und das zweite Zahnrad 36 steht mit der zweiten Zahnstange 40 in Eingriff. Das zweite Zahnrad 36 weist gegenüber dem dritten Zahnrad 37 einen geringeren Durchmesser auf, so dass eine Untersetzung der Drehbewegung des ersten Zahnrads 34 erfolgt. Ferner erfolgt dabei gegenüber der ersten Zahnstange 38 eine betragsmäßig geringere Verlagerung der zweiten Zahnstange 40 aus dem Gehäuse 14 heraus nach rechts, wenn die Halteeinheit 60 und auch die erste Zahnstange 38 nach rechts aus dem Gehäuse 14 heraus bewegt werden.

Werden die Halteeinheit 60 aus dem Aufnahmeraum und damit die erste Zahnstange 38 aus dem Gehäuse 14 heraus nach rechts bewegt, stellt sich über die Getriebeanordnung 32 eine betragsmäßig geringere Bewegung der zweiten Zahnstange 40 nach rechts ein. In Bezug auf das Gesamtsystem der Einrichtung 10 zum Halten von Gegenständen werden sowohl die erste Zahnstange 38 als auch die zweite Zahnstange 40 in der gleichen Richtung bewegt. In Bezug auf die Halteeinheit 60 wird trotz einer Verlagerung der zweiten Zahnstange 40 in die gleiche Richtung wie die Halteeinheit 60 die zweite Zahnstange 40 in die entgegengesetzte Richtung bewegt, da diese über die Getriebeanordnung 32 mit einer geringen Geschwindigkeit bewegt wird. Hierdurch wird erreicht, dass beim Herausbewegen der Halteeinheit 60 aus dem Gehäuse 14 die zweite Zahnstange 40 und der Halteabschnitt 48 der zweiten Zahnstange 40 einen Schwenkarm 16 der Blende 18 freigeben, so dass die Blende 18 verschwenkt werden kann. Die Blende 18 ist hierzu über die Schwenkarme 16 um die Schwenkachse D drehbar an der Halteeinheit 60 gelagert.

Dadurch kann das Verschwenken der Blende 18 verzögert erfolgen. Die Halteeinheit 60 kann um einen konstruktiv durch entsprechende Auswahl der Komponenten bestimmbaren Weg aus dem Gehäuse 14 verfahren werden, bevor die Blende 18 verschwenkt wird. Hierdurch wird ein Anschlagen der Schwenkarme 16 der Blende 18 verhindert. Bei der Verlagerung der Halteeinheit 60 zurück in das Gehäuse 14 wird ebenfalls ein Anschlagen verhindert und die Schwenkarme 16 werden über die Halteabschnitte 48 der zwei zweiten Zahnstangen 40 verschwenkt, bevor die Schwenkarme 16 in Kontakt mit dem Gehäuse 14 kommen oder eine die Öffnung des Gehäuses 14 umgebende Verkleidung beschädigen.

Bei den in den Fig. 5 und 6 gezeigten Stellungen wird der Endabschnitt 50 über den Halteabschnitt 48 der zweiten Zahnstange 40 gehalten. Zusätzlich ist ein Widerlager 52 vorgesehen, das eine weitere Verlagerung des Schwenkarms 16 und damit der Blende 18 nach oben verhindert. Die gegenüberliegende Seite der Halteeinheit 60 ist entsprechend ausgebildet.

Das Gehäuse 14 umgibt die Halteeinheit 60 im nicht verfahrenen Zustand abschnittsweise und ist über Befestigungselemente 58 mit der Aufnahme 12 für die Luftausströmer verbunden. Wie in Fig. 1 dargestellt, weist die Aufnahme 12 nach hinten ragende Aufnahmebereiche auf. Die Einrichtung 10 wird ebenfalls an einen solchen nach hinten ragenden Aufnahmebereich befestigt, sodass im verbundenen Zustand mit der Aufnahme 12 die Blende 18 im nicht verschwenkten Zustand bündig mit der Lamelle der Luftausströmer abschließt.

Fig. 6 zeigt eine weitere schematische Seitenansicht der Einrichtung 10 von Fig. 5. In Fig. 6 ist eine Herzkurvenplatte 44 dargestellt, in welche ein Führungsstift 46 der Halteeinheit 60 im nicht herausgefahrenen Zustand eingreift. Über den Führungsstift 46, der in einer entsprechenden Raststellung innerhalb der Herzkurve aufgenommen ist, wird die Halteeinheit 60 in der nicht verfahrenen Position gehalten. Die Rollfeder 22, die am Gehäuse 14 angeordnet und über eine entsprechende Öffnung durch das Gehäuse 14 hindurchgeführt und mit der Halteeinheit 60 verbunden ist, ist in der aufgenommenen Stellung der Halteeinheit 60 im Aufnahmeraum gespannt. Die Rollfeder 22 ist daher bestrebt, die Halteeinheit 60 herauszudrücken. Wird nun ein Druck auf die Blende 18 in Richtung des Aufnahmeraums hinein ausgeübt, wird die Halteeinheit 60 aus der aufgenommenen Position innerhalb des Aufnahmeraumes in die herausgefahrene Position über die Rollfeder 22 bewegt, wobei die Rollfeder 22 aufgewickelt wird.

Wie bereits für die Fig. 5 und 6 angegeben, zeigt auch Fig. 7 eine schematische Darstellung der Halteeinheit 60 sowie weiterer Komponenten. So zeigt Fig. 7 einen Zustand der Halteeinheit 60, wobei die Blende 18 nicht verschwenkt ist, da die zweite Zahnstange 40 sich noch so weit unterhalb des Schwenkarms 16 befindet, dass der Endabschnitt 50 von dem Halteabschnitt 48 gehalten wird. In der herausgefahrenen Stellung der Halteeinheit 60 ist die Rollfeder 22 im Wesentlichen aufgewickelt auf der Welle gelagert.

Fig. 7 zeigt zusätzlich die Anordnung des Führungsstifts 46, der hinter der Herzkurvenplatte 44 in einer entsprechenden Herzkurve aufgenommen ist. Die Herzkurve weist einen Einführabschnitt auf, über welchen der Führungsstift 46 beim Zurückführen der Halteeinheit 60 in die Führungsbahn der Herzkurve eingeführt wird.

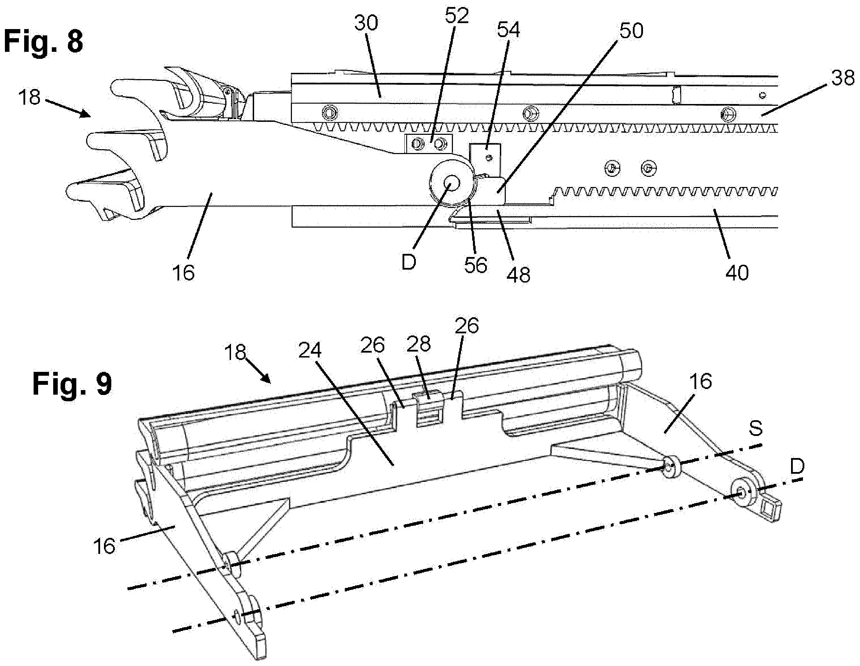

Fig. 8 zeigt eine schematische Seitenansicht von Komponenten der Einrichtung 10 von Fig. 5. Fig. 8 zeigt nochmals die Ausbildung der Schwenkarme 16 und deren Lagerung im nicht verschwenkten Zustand über den Halteabschnitt 48, welcher sich unterhalb eines Endabschnitts 50 des Schwenkarms 16 befindet. Zusätzlich sind das Widerlager 52 und ein Halteelement 54 dargestellt. Das Halteelement 54 dient zur Lagerung eines Magneten, der mit einem Magneten oder einem metallischen Element, welches am oder im Endabschnitt 50 aufgenommen ist, zusammenwirkt, sodass der Schwenkarm 16 in der nicht verschwenkten Position gehalten wird. Zusätzlich ist um einen Lagerbolzen im Bereich der Schwenkachse D des Schwenkarms 16 eine Spiralfeder 56 vorgesehen, welche einen Druck auf den Schwenkarm 16 ausübt, sodass dieser bestrebt ist, nach unten verschwenkt zu werden. Bei der in Fig. 8 gezeigten Stellung kann der Schwenkarm 16 jedoch nicht nach unten verschwenkt werden, da er über den Halteabschnitt 48 gehalten ist.

Fig. 9 zeigt eine perspektivische Darstellung einer Blende 18 und einer Halteplatte 24. Die Halteplatte 24 ist über zwei Vorsprünge 26 mit einem Ansatz 28 der Blende 18 verbunden, wobei durch die Vorsprünge 26 und den Ansatz 28 eine Welle geführt ist. Die Vorsprünge 26 können dabei um den Ansatz 28 verschwenkt werden. Zusätzlich weist die Halteplatte 24 zwei abstehende, im Wesentlichen dreieckförmige Elemente auf, die an einem spitz zulaufenden Abschnitt runde Schwenkelemente aufweisen, in welche Zapfen eingreifen, die mit dem Rahmen 62 der Halteeinheit 60 verbunden sind. Durch diese Zapfen wird eine zweite Schwenkachse S definiert. Wird die Blende 18 um die Schwenkachse D nach unten verschwenkt, erfolgt ebenso ein Verschwenken der Halteplatte 24 um die Schwenkachse S. Die Abstände der Schwenkachsen S und D sowie die Ausbildung der Halteplatte 24 und deren schwenkbare Kopplung mit der
Blende 18 sind so gewählt, dass bei einem vollständig verschwenkten Zustand der Blende 18 die Halteplatte 24 eine im Wesentlichen horizontal sich streckende ebene Auflagefläche für Gegenstände bereitstellt. Die Halteplatte 24 befindet sich dabei im Wesentlichen unterhalb eines Funktionselements.

Zusätzlich ist in Fig. 9 eine Ausbuchtung im Endabschnitt 50 dargestellt, in welcher bspw. ein Magnet oder eine Metallplatte eingesetzt werden können. Die Schwenkarme 16 weisen ebenso Öffnungen auf, durch welche die Schwenkachse D verläuft und in welche weitere Zapfen an der Halteeinheit 60 eingreifen.

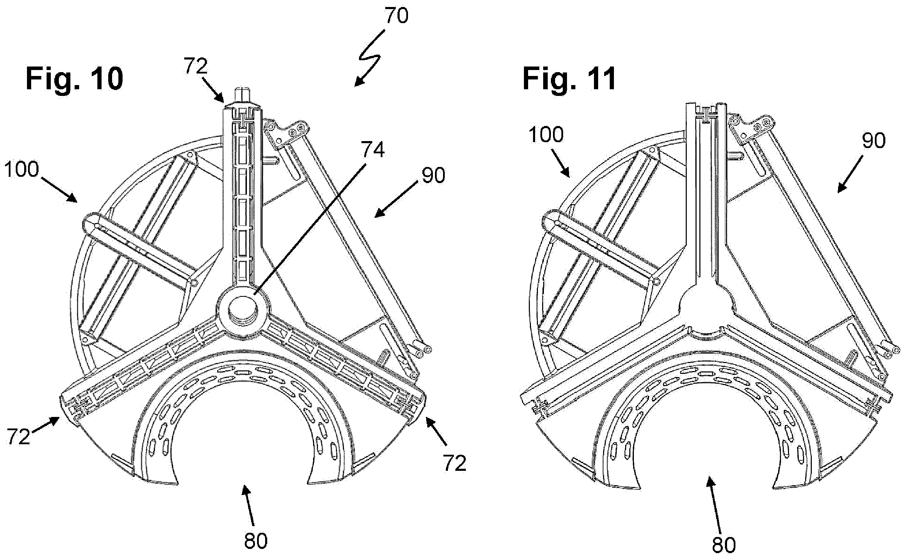

Fig. 10 zeigt eine schematische Darstellung eines Aufnahmeelements 70 mit eingesetzten Funktionselementen 80, 90 und 100.

Das Aufnahmeelement 70 weist drei Arme 72 auf, die in einem Winkel von 120° versetzt zueinander um einen mittleren Abschnitt 74 angeordnet sind. Der mittlere Abschnitt 74 weist eine Öffnung auf und ist auf einem entsprechenden Zapfen oder einer Lagerbuchse bzw. Lagerwelle des Rahmens 62 der Halteeinheit 60 drehbar gelagert. Die Arme 72 weisen ferner Öffnungen auf, in welchen Halteelemente 86, 94 und 104 der Funktionselemente 80, 90 und 100 eingesetzt werden können. Die Funktionselemente 80, 90 und 100 können daher von dem Aufnahmeelement 70 aufgenommen werden, wobei hierzu eine entsprechende Aufnahme, in welcher ein Funktionselement 80, 90 oder 100 aufgenommen ist, frei zugänglich sein muss. Die Funktionselemente 80, 90 und 100 können aus den Aufnahmen zwischen den Armen 72 entnommen und durch andere Funktionselemente, die bspw. in den Figuren nicht dargestellt sind, ersetzt werden.

Fig. 11 zeigt eine schematische Darstellung der Funktionselemente 80, 90 und 100 von Fig. 10 ohne Aufnahmeelement 70.

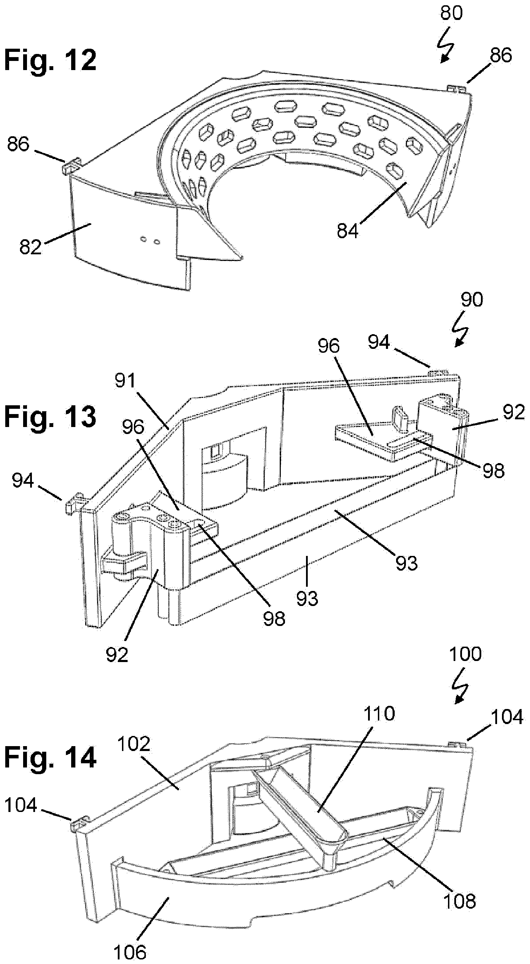

Eine Ausbildung der Funktionselemente ist in den nachfolgenden Fig. 12 bis 14 dargestellt.

Dabei zeigt Fig. 12 eine perspektivische Darstellung eines ersten Funktionselementes 80, welches als Cupholder dient. Das Funktionselement 80 weist einen Hauptkörper 82 auf, der einen Einsatz 84 aufweist. Der Einsatz 84 ist gummiert ausgebildet und kann damit leicht Gegenstände wie Flaschen- oder Getränkebehälter halten. Die Öffnung, die über den Einsatz 84 bereitgestellt wird, umgibt dabei einen Getränkebehälter zumindest mehr als die Hälfte dessen Umfangs. An dem Hauptkörper 82 sind rückwärtig zwei Halteelemente 86 vorgesehen, die in die entsprechenden Öffnungen in den Armen 72 eingesetzt werden können.

Fig. 13 zeigt eine perspektivische Darstellung eines zweiten Funktionselements 90, welches bspw. als Brillenfach dienen kann. Das Funktionselement 90 weist einen Hauptkörper 91 und rückwärtig daran angeordnete Halteelemente 94 auf. Zusätzlich weist das Funktionselement 90 zwei Haltescheiben 96 mit einer darin angeordneten Führungsöffnung 98 auf. Über diese Führungsöffnungen 98 sind zwei Halteblöcke 92 zueinander verschiebbar aufgenommen. Die Halteblöcke 92 weisen abstehend nach unten Haltestifte auf, die zum Halten zweier Federleisten 93 vorgesehen sind. Zwischen diese Federleisten 93 kann bspw. eine Brille oder ein anderer Gegenstand eingesetzt werden.

Fig. 14 zeigt eine perspektivische Darstellung eines dritten Funktionselements 100, welches bspw. als Telefonhalter dient. Das Funktionselement 100 weist einen Grundkörper 102 und rückseitig daran angeordnete Halteelemente 104 auf. Zusätzlich weist das Funktionselement 100 einen gekrümmten Steg 106 auf, der zur Lagerung zweier elastischer Elemente 108 und 110 dient. Die elastischen Elemente 108 und 110 können bspw. durch Gummis gebildet werden. Daher ist es möglich, die elastischen Elemente 108 und 110 beliebig im Rahmen des über das Funktionselement 100 definierten Aufnahmeraums zwischen dem Grundkörper 102 und der Leiste 106 zu verformen und darin verschiedene Gegenstände aufzunehmen.

Insbesondere bewirkt eine Kombination der jeweiligen Aufnahmen, gebildet durch die Funktionselemente 80, 90 und 100, im Zusammenspiel mit einer verschwenkbaren Blende 18 und einer Lagerung über die Halteplatte 24 eine verbesserte Möglichkeit zur Aufnahme und sicheren Halterung von verschiedenen Gegenständen.

### Bezugszeichenliste

- 10: Einrichtung
- 12: Aufnahme
- 14: Gehäuse
- 16: Schwenkarm
- 18: Blende
- 20: Führungsleiste
- 22: Rollfeder
- 24: Halteplatte
- 26: Vorsprung
- 28: Ansatz
- 30: Führung
- 32: Getriebeanordnung
- 34: erstes Zahnrad
- 36: zweites Zahnrad
- 37: drittes Zahnrad
- 38: erste Zahnstange
- 40: zweite Zahnstange
- 42: Bewegungsdämpfer
- 44: Herzkurvenplatte
- 46: Führungsstift
- 48: Halteabschnitt
- 50: Endabschnitt
- 52: Widerlager
- 54: Halteelement
- 56: Spiralfeder
- 58: Befestigungselement
- 60: Halteeinheit
- 62: Rahmen
- 70: Aufnahmeelement
- 72: Arm
- 74: Abschnitt
- 80: Funktionselement
- 82: Hauptkörper
- 84: Einsatz
- 86: Halteelement
- 90: Funktionselement
- 91: Hauptkörper
- 92: Halteblock
- 93: Federleiste
- 94: Halteelement
- 96: Haltescheibe
- 98: Führungsöffnung
- 100: Funktionselement
- 102: Hauptkörper
- 104: Haltelement
- 106: Steg
- 108: elastisches Element
- 110: elastisches Element

- D: Schwenkachse
- S: Schwenkachse

## Patentansprüche

1. Einrichtung zum Halten von Gegenständen, mindestens aufweisend eine Halteeinheit (60), eine mit der Halteeinheit (60) gekoppelte Blende (18) und ein drehbar in der Halteeinheit (60) gelagertes Aufnahmeelement (70), wobei
- die Halteeinheit (60) verschiebbar in einem Aufnahmeraum angeordnet ist,
- das Aufnahmeelement (70) mindestens zwei Abschnitte aufweist, in welche Funktionselemente (80; 90; 100) eingesetzt sind,
- die Funktionselemente (80; 90; 100) zur Aufnahme und/oder zum Halten von Gegenständen ausgebildet sind, und
- die Blende (18) verschwenkbar an der Halteeinheit (60) angeordnet und durch eine Verlagerung der Halteinheit (60) aus dem Aufnahmeraum verschwenkbar ist.

2. Einrichtung nach Anspruch 1, wobei die Blende (18) über mindestens eine Getriebeanordnung (32) mit der Halteeinheit (60) gekoppelt ist.

3. Einrichtung nach Anspruch 2, wobei
- die Getriebeanordnung (32) mindestens ein erstes Zahnrad (34) und ein zweites Zahnrad (36) aufweist, die miteinander in Eingriff stehen und drehbar an einem den Aufnahmeraum mindestens abschnittsweise umgebenden Gehäuse (14) gelagert sind,
- das erste Zahnrad (34) mit einer an dem Halteelement (60) angeordneten ersten Zahnstange (38) und das zweite Zahnrad (36) mit einer zweiten im Aufnahmeraum verschiebbar gelagerten Zahnstange (40) gekoppelt sind, und
- an der zweiten Zahnstange (40) die Blende (18) verschwenkbar gelagert ist, oder
das erste Zahnrad (34) über ein drittes Zahnrad (37) mit dem zweiten Zahnrad (36) gekoppelt ist, wobei das zweite Zahnrad (36) und das dritte Zahnrad (37) um eine gemeinsame Drehachse verdrehbar sind und die zweite Zahnstange (40) einen Halteabschnitt (48) aufweist, welcher einen Endabschnitt (50) eines Schwenkarms (16) der Blende (18) im nicht verfahrenen Zustand der Halteinheit (60) hält.

4. Einrichtung nach Anspruch 3, wobei die Halteeinheit (60) ein Arretierungselement für den Endabschnitt (50) mindestens eines Schwenkarms (16) der Blende (18) aufweist.

5. Einrichtung nach Anspruch 3 oder 4, aufweisend eine Feder, die im Bereich der Schwenkachse (D) der Blende (18) angeordnet ist.

6. Einrichtung nach einem der Ansprüche 1 bis 5, aufweisend mindestens eine Federeinrichtung und eine Herzkurvenanordnung, wobei die Halteeinheit (60) über die mindestens eine Federeinrichtung nach einer Entriegelung mittels der Herzkurvenanordnung aus dem Aufnahmeraum heraus verfahrbar ist.

7. Einrichtung nach Anspruch 6, wobei die Federeinrichtung mindestens eine Rollfeder (22) aufweist, die an einem Ende mit der Halteeinheit (60) verbunden und an dem anderen Ende auf einer drehbar am Aufnahmeraum gelagerten Welle gelagert ist.

8. Einrichtung nach einem der Anspruch Ansprüche 1 bis 5, wobei die Halteeinheit (60) über einen elektrischen Antrieb aus dem Aufnahmefach verfahrbar ist, und/oder das Aufnahmeelement (70) über einen elektrischen Antrieb verdrehbar ist.

9. Einrichtung nach einem der Ansprüche 1 bis 8, wobei die Funktionselemente (80; 90; 100) elastische, flexible Elemente aufweisen.

10. Einrichtung nach einem der Ansprüche 1 bis 9, wobei die Blende (18) an der im nicht verschwenkten Zustand dem Aufnahmeraum zugewandten Seite so ausgebildet ist, dass die dem Aufnahmeraum zugewandte Seite im verschwenkten Zustand einen im Wesentlichen ebenen Auflageabschnitt bereitstellt.

## Claims

1. Device for holding objects, at least comprising a holding unit (60), a cover (18) coupled with the holding unit (60) and a receiving element (70) rotatably mounted in the holding unit (60), wherein
- the holding unit (60) is displaceably arranged in a receiving space,
- the receiving element (70) has at least two sections into which functional elements (80; 90; 100) are inserted,
- the functional elements (80; 90; 100) are constructed for receiving and/or holding objects, and
- the cover (18) is pivotably arranged at the holding unit (60) and is pivotable by a displacement of the holding unit (60) out of the receiving space.

2. Device according to claim 1, wherein the cover (18) is coupled with the holding unit (60) by way of at least one transmission arrangement (32).

3. Device according to claim 2, wherein
- the transmission arrangement (32) comprises at least one first gearwheel (34) and second gearwheel (36), which are disposed in interengagement and are rotatably mounted on a housing (14) surrounding the receiving space at least in a region,
- the first gearwheel (34) is coupled with a first rack (38) arranged at the holding element (60) and the second gearwheel (36) is coupled with a second rack (40) displaceably mounted in the receiving space, and
- the cover (18) is pivotably mounted on the second rack (40)
or
the first gearwheel (34) is coupled with the second gearwheel (36) by way of a third gearwheel (37), wherein the second gearwheel (36) and the third gearwheel (37) are rotatable about a common axis of rotation and the second rack (40) has a holding section (48) which holds an end section (50) of a pivot arm (16) of the cover (18) in the non-moved state of the holding unit (60).

4. Device according to claim 3, wherein the holding unit (60) comprises a locking element for the end section (50) of at least one pivot arm (16) of the cover (18).

5. Device according to claim 3 or 4, comprising a spring arranged in the region of the pivot axis (D) of the cover (18).

6. Device according to any one of claims 1 to 5, comprising at least one spring device and a heart cam arrangement, wherein the holding unit (60) is movable out of the receiving space by way of the at least one spring device after unlocking by means of the heart cam arrangement.

7. Device according to claim 6, wherein the spring device comprises at least one roll spring (22) which is connected at one end with the holding unit (60) and is mounted at the other end on a shaft rotatably mounted at the receiving space.

8. Device according to any one of claims 1 to 5, wherein the holding unit (60) is movable out of the receiving compartment by way of an electric drive and/or the receiving element (70) is rotatable by way of an electric drive.

9. Device according to any one of claims 1 to 8, wherein the functional elements (80; 90; 100) comprise elastic, flexible elements.

10. Device according to any one of claims 1 to 9, wherein the cover (18) is so constructed at the side which in the non-pivoted state faces the receiving space that in the pivoted state the side facing the receiving space provides a substantially planar support section.

## Revendications

1. Dispositif de fixation d'objets, présentant au moins une unité de fixation (60), un cache (18) couplé à l'unité de fixation (60) et un élément de réception (70) logé en rotation dans l'unité de fixation (60), dans lequel
- l'unité de fixation (60) est agencée de manière coulissante dans un espace de réception,
- l'élément de réception (70) présente au moins deux sections, dans lesquelles des éléments fonctionnels (80 ; 90 ; 100) sont insérés,
- les éléments fonctionnels (80 ; 90 ; 100) sont réalisés pour la réception et/ou pour la fixation d'objets, et
- le cache (18) est agencé de manière pivotante au niveau de l'unité de fixation (60) et peut pivoter hors de l'espace de réception par un déplacement de l'unité de fixation (60).

2. Dispositif selon la revendication 1, dans lequel le cache (18) est couplé à l'unité de fixation (60) par le biais d'au moins un agencement de transmission (32).

3. Dispositif selon la revendication 2, dans lequel
- l'agencement de transmission (32) présente au moins une première roue dentée (34) et une deuxième roue dentée (36), qui sont en prise l'une avec l'autre et sont logées en rotation au niveau d'un boîtier (14) entourant au moins par section l'espace de réception,
- la première roue dentée (34) est couplée à une première crémaillère (38) agencée au niveau de l'élément de fixation (60) et la deuxième roue dentée (36) est couplée à une deuxième crémaillère (40) logée de manière coulissante dans l'espace de réception, et
- le cache (18) est logé de manière pivotante au niveau de la deuxième crémaillère (40), ou
la première roue dentée (34) est couplée à la deuxième roue dentée (36) par le biais d'une troisième roue dentée (37), dans lequel la deuxième roue dentée (36) et la troisième roue dentée (37) peuvent tourner autour d'un axe de rotation commun et la deuxième crémaillère (40) présente une section de fixation (48), laquelle fixe une section d'extrémité (50) d'un bras pivotant (16) du cache (18) à l'état non déplacé de l'unité de fixation (60).

4. Dispositif selon la revendication 3, dans lequel l'unité de fixation (60) présente un élément d'arrêt pour la section d'extrémité (50) d'au moins un bras pivotant (16) du cache (18).

5. Dispositif selon la revendication 3 ou 4, présentant un ressort, qui est agencé dans la zone de l'axe de pivotement (D) du cache (18).

6. Dispositif selon l'une quelconque des revendications 1 à 5, présentant au moins un dispositif à ressort et un agencement de came en coeur, dans lequel l'unité de fixation (60) peut être déplacée hors de l'espace de réception par le biais de l'au moins un dispositif à ressort après un déverrouillage au moyen de l'agencement de came en coeur.

7. Dispositif selon la revendication 6, dans lequel le dispositif à ressort présente au moins un ressort à crosse (22), qui est relié à une extrémité à l'unité de fixation (60) et est logé à l'autre extrémité sur un arbre logé en rotation au niveau de l'espace de réception.

8. Dispositif selon l'une quelconque des revendications 1 à 5, dans lequel l'unité de fixation (60) peut être déplacée hors du compartiment de réception par le biais d'un entraînement électrique, et/ou l'élément de réception (70) peut être tourné par le biais d'un entraînement électrique.

9. Dispositif selon l'une quelconque des revendications 1 à 8, dans lequel les éléments fonctionnels (80 ; 90 ; 100) présentent des éléments élastiques, souples.

10. Dispositif selon l'une quelconque des revendications 1 à 9, dans lequel le cache (18) est réalisé au niveau du côté tourné vers l'espace de réception à l'état non pivoté de sorte que le côté tourné vers l'espace de réception fournit à l'état pivoté une section d'appui sensiblement plane.
